# EUROPÄISCHE PATENTSCHRIFT

(11) **EP 1 497 014 B1**
(45) Veröffentlichungstag und Bekanntmachung des Hinweises auf die Patenterteilung: **07.06.2006**
(21) Anmeldenummer: 03712069.8
(22) Anmeldetag: 21.03.2003
(51) Int. Cl.: B01D 53/86

(54) **ENTSTICKUNGSVERFAHREN**
DENITRIFICATION METHOD
PROCEDE DE DENITRIFICATION

(30) Priorität: 09.04.2002 DE 10215605
(43) Veröffentlichungstag der Anmeldung: 19.01.2005
(73) Patentinhaber: Uhde GmbH, 44141 Dortmund (DE)
(72) Erfinder: SCHWEFER, Meinhard, 59872 Meschede (DE); GROVES, Michael, 45529 Hattingen (DE)
(74) Vertreter: Ackermann, Joachim
(86) Internationale Anmeldenummer: PCT/EP2003/002958
(87) Internationale Veröffentlichungsnummer: WO 2003/084646

(56) Entgegenhaltungen:
- WO-A-99/49954
- WO-A-02/087733
- PATENT ABSTRACTS OF JAPAN vol. 1997, no. 05, 30. Mai 1997 (1997-05-30) & JP 09 000884 A (BABCOCK HITACHI KK), 7. Januar 1997 (1997-01-07) in der Anmeldung erwähnt -& DATABASE WPI Week 199711 Derwent Publications Ltd., London, GB; AN 1997-113390 XP002242664 & JP 09 000884 A, 7. Januar 1997 (1997-01-07)
- KOEGEL M ET AL: "SIMULTANEOUS CATALYTIC REMOVAL OF NO AND N2O USING FE-MFI" JOURNAL OF CATALYSIS, ACADEMIC PRESS, DULUTH, MN, US, Bd. 182, 1999, Seiten 470-478, XP000996158 ISSN: 0021-9517

## Beschreibung

Die Erfindung betrifft ein Verfahren zur Minderung des Gehaltes von Stickoxiden aus Ab- oder Prozessgasen

Bei vielen Prozessen, wie z. B. Verbrennungsprozessen oder bei der industriellen Herstellung von Salpetersäure resultiert ein mit Stickstoffmonoxid NO, Stickstoffdioxid NO₂ (zusammen bezeichnet als NOₓ) sowie Lachgas N₂O beladenes Abgas. Während NO und NO₂ seit langem als Verbindungen mit ökotoxischer Relevanz bekannt sind (Saurer Regen, Smog-Bildung) und weltweit Grenzwerte für deren maximal zulässige Emissionen festgelegt sind, rückt in den letzten Jahren in zunehmenden Masse auch Lachgas in den Focus des Umweltschutzes, da dieses in nicht unerheblichem Masse zum Abbau von stratosphärischem Ozon und zum Treibhauseffekt beiträgt. Es besteht daher aus Gründen des Umweltschutzes ein dringender Bedarf an technischen Lösungen, die Lachgasemissionen zusammen mit den NOx-Emissionen zu beseitigen.

Zur separaten Beseitigung von N₂O einerseits und NOₓ andererseits bestehen zahlreiche Möglichkeiten, die in zweistufigen Prozessen in geeigneter Weise kombiniert werden können.

Aus der EP-A-393,917 ist bekannt, dass Stickoxide mittels Ammoniak und ausgewählten Zeolith-Katalysatoren, aus Gasen entfernt werden können. Diese Schrift beschreibt allerdings nur die Reduktion von NOₓ mittels Ammoniak. Als Zeolithe werden die Typen USY, Beta und ZSM-20 vorgeschlagen, die große Poren und ein spezielles Siliciumdioxid-zu-Aluminiumoxid-Verhältnis aufweisen.

Aus Chem. Commun. 2000, 745-6, ist bekannt, dass N₂O mit Methan in der Gegenwart von überschüssigem Sauerstoff und in Gegenwart eines eisenbeladenen Zeolithen vom Typ Beta (= BEA) selektiv katalytisch reduziert werden kann.

Die JP-A-09/000,884 offenbart ein Verfahren zur Verminderung des Gehaltes an N₂O und NO bei dem als Reduktionsmittel Ammoniak, Alkohole und/oder Kohlenwasserstoffe und als Katalysator Zeolithe vom Typ Pentasil oder Mordenit eingesetzt werden.

Ausgehend von diesem Stand der Technik wird durch die vorliegende Erfindung ein einfaches, aber äußerst wirtschaftlich arbeitendes Verfahren bereitgestellt, das bei niedrigen Betriebstemperaturen ausgezeichnete Umsätze sowohl für den NOₓ- als auch für den N₂O- Abbau liefert.

Es wurde überraschenderweise gefunden, dass bei der Reduktion von N₂O aus NOₓ-haltigen Gasen das NOₓ auf den Abbau des N₂O einen inhibierenden Effekt ausübt, und dass bei vollständiger Reduktion des NOₓ eine verbesserte Reduktion des N₂O erfolgt.

Die Erfindung betrifft ein Verfahren zur Minderung des Gehalts von NOₓ und N₂O in Gasen, insbesondere in Prozeßgasen und Abgasen, umfassend die Maßnahmen:
a) Zugabe mindestens eines Stickstoff enthaltenden Reduktionsmittels, insbesondere von Ammoniak, zu dem NOₓ und N₂O enthaltenden Gas in einer solchen Menge, wie mindestens zur vollständigen Reduktion des NOₓ benötigt wird,
b) Zugabe eines Kohlenwasserstoffes, von Kohlenmonoxid, von Wasserstoff oder von einem Gemisch mehrerer dieser Gase zu dem NOₓ und N₂O enthaltenden Gas für die Reduktion des N₂O, und
c) Leiten des Gasgemisches in mindestens eine Reaktionszone mit Temperaturen bis zu 450°C, die einen oder mehrere mit Eisen beladene Zeolithe enthält, vorzugsweise mit Eisen beladene Zeolithe enthaltend aus Zwölfringen bestehende Kanäle, insbesondere mit Eisen beladene Zeolithe, deren sämtliche Kanäle aus Zwölfringen bestehen, ganz besonders bevorzugt mit Eisen beladene Zeolithe vom Typ BEA oder FAU.

Zur Durchführung des erfindungsgemäßen Verfahrens wird das N₂O und NO_{X} enthaltende Gas zunächst mit Stickstoff enthaltendem Reduktionsmittel und Kohlenwasserstoffen bzw. Kohlenmonoxid und/oder Wasserstoff gemischt und anschließend zum Abbau von N₂O und NO_{X} jeweils durch Reduktion bei einer Temperatur von weniger als 450°C über den/die mit Eisen beladenen Zeolithe geleitet.

Nach Merkmal a) des erfindungsgemäßen Verfahrens ist das Stickstoff enthaltende Reduktionsmittel in einer solchen Menge zuzusetzen, wie mindestens zur vollständigen Reduktion des NOₓ benötigt wird. Unter der für die vollständige Reduktion des NOₓ notwendigen Menge an Stickstoff enthaltendem Reduktionsmittel wird im Rahmen dieser Beschreibung diejenige Menge an Stickstoff enthaltendem Reduktionsmittel verstanden, die notwendig ist, um den Anteil des NOₓ im Gasgemisch bis auf einen Restgehalt von kleiner als 10 ppm, vorzugsweise kleiner als 5 ppm und insbesondere kleiner als 1 ppm zu reduzieren.

Als Stickstoff enthaltende Reduktionsmittel können beliebige Verbindungen herangezogen werden, solange diese zur Reduktion von NOₓ in der Lage sind. Beispiele für derartige Reduktionsmittel sind Wasserstoffverbindungen des Stickstoffs, wie Azane, Hydroxylderivate von Azanen, sowie Amine, Oxime, Carbamate, Harnstoff oder Harnstoffderivate.

Beispiele für Azane sind Hydrazin und ganz besonders Ammoniak.

Beispiele für Hydroxylderivate von Azanen sind Hydroxylamin.

Beispiele für Amine sind primäre aliphatische Amine, wie Methylamin.

Ein Beispiel für Carbamate ist Ammoniumcarbamat.

Beispiele für Harnstoffderivate sind N,N'-substituierte Harnstoffe, wie N,N'-Dimethylharnstoff. Harnstoffe und Harnstoffderivate werden vorzugsweise in Form von wässrigen Lösungen eingesetzt.

Nach Merkmal b) des erfindungsgemäßen Verfahrens werden der Kohlenwasserstoff, das Kohlenmonoxid und/oder der Wasserstoff zur Reduktion des N₂O zugesetzt. Diese Reduktionsmittel sind dabei in einer solchen Menge zuzusetzen, wie zur Reduktion des N₂O benötigt wird. Darunter wird im Rahmen dieser Beschreibung diejenige Menge an Reduktionsmittel verstanden, die notwendig ist, um den Anteil des N₂O im Gasgemisch vollständig oder bis zur gewünschten Endkonzentration zu reduzieren.

Im allgemeinen beträgt die Temperatur in der Reaktionszone 200 bis 450°C, vorzugsweise 250 bis 450°C.

Die Minderung des Gehalts von NO_{X} und N₂O erfolgt vorzugsweise in Gegenwart eines einzigen Katalysators, welcher im wesentlichen einen oder mehrere mit Eisen beladene Zeolithe enthält.

Bei Verwendung mehrerer und verschiedener Zeolithkatalysatoren können diese miteinander vermengt sein oder auch nacheinander angeordnet sein. Letztere Anordnung ist insbesondere dann vorteilhaft, wenn der eingangsseitig angeordnete Zeolith besonders die NOₓ-Reduktion mittels Stickstoff enthaltendem Reduktionsmittel katalysiert und/oder der ausgangsseitig angeordnete Zeolith besonders die N₂O-Reduktion katalysiert.

Auf diese Weise kann der NOₓ-Gehalt in der ersten Zeolithzone besonders schnell und vollständig reduziert werden, so dass der nachgeordnete Zeolith seine Funktion zur N₂O-Reduktion in vollem Umfang erfüllen kann, da das die N₂O-Reduktion nachteilig beeinflussende NOₓ schon vor Eintritt in die zweite Zone vollständig abgebaut wurde.

Als Reduktionsmittel im Sinne der Erfindung werden für das NOₓ Stickstoff enthaltende Reduktionsmittel, insbesondere Ammoniak, und für das N₂O Kohlenwasserstoffe, Wasserstoff, Kohlenmonoxid oder deren Gemische, wie z.B. Synthesegas, eingesetzt.

Die zugesetzte Menge an Reduktionsmittel zur Reduktion des N₂O richtet sich im wesentlichen nach dem gewünschten Abbaugrad des N₂O und nach der Art des verwendeten Reduktionsmittels. Bei Verwendung von Kohlenwasserstoffen wie z.B. von Methan oder auch von Propan beträgt die benötigte Menge etwa 0,2 -1 mol Kohlenwasserstoff / 1 mol zu reduzierendes N₂O. Bevorzugt sind Mengen von 0,2 - 0,7 mol Kohlenwasserstoff / 1 mol zu reduzierendes N₂O, insbesondere 0,2 - 0,5 mol Kohlenwasserstoff / 1 mol zu reduzierendes N₂O.

Diese Menge ist sehr gering verglichen mit sonstigen, in der Literatur angegebenen Werten (vgl. z.B. Figur 4 in JP-A-09/000,884). Dass dennoch ein hoher N₂O-Abbau erzielt wird, lässt sich durch die vollständige NOₓ-Reduktion erklären, wie erfindungsgemäß gefordert. Dieses ist ein großer Vorteil des erfindungsgemäßen Verfahrens, da insbesondere bei hohen Abbauraten an N₂O die Kosten für das zugesetzte Reduktionsmittel die Ökonomie des Verfahrens empfindlich beeinflussen.

Die Aussagen zu den Mengen der verwendeten Reduktionsmittel gelten selbstverständlich nur für den Fall, dass die Reduktion der abzubauenden Stickoxide keinen sonstigen, beispielsweise kinetischen Hemmnissen unterworfen ist. Derartige Hemmnisse sind dem Fachmann bekannt. So ist beispielsweise für eine gegebene Redoxreaktion immer eine gewisse Mindesttemperatur und Mindestverweilzeit im Reaktorbett erforderlich. So läuft die NOₓ-Reduktion mittels NH₃ so schnell ab, dass die kinetischen Hemmnisse der Reaktion auch für hohe Raumgeschwindigkeiten (>50.000 h⁻¹) schon bei Temperaturen von 200°C überwunden sind, während die N₂O-Reduktion, z.B. bei der Verwendung von Methan, erst bei deutlich höheren Temperaturen (> 300°C) und kleineren Raumgeschwindigkeiten (ca. 10.000 h⁻¹) vollständig abläuft.

Die Temperatur des erfindungsgemäßen Verfahrens ist aber auch noch oben limitiert. So bewirken zu hohe Temperaturen (> 450°C) eine partielle Oxidation der zugesetzten Reduktionsmittels mit im Abgas vorhandenem Sauerstoff, so dass diese nicht mehr zur Reduktion des NOₓ und N₂O zur Verfügung stehen. Dies gilt insbesondere für das zugesetzte Stickstoff enthaltende Reduktionsmittel. Die NOₓ₋Reduktion ist dann nicht mehr vollständig, was zur Folge hat, dass auch die N₂O-Reduktion gehemmt wird.

Besonders bevorzugt als Reduktionsmittel für N₂O werden gesättigte Kohlenwasserstoffe oder deren Gemische, wie Methan, Ethan, Propan, Butan, Synthesegas oder LPG.

Ganz besonders bevorzugt wird Methan. Dieses wird insbesondere in Kombination mit eisenbeladenem Zeolith vom Typ BEA eingesetzt.

Die zugesetzte Menge an Stickstoff enthaltendem Reduktionsmittel muß dabei so ausgewählt werden, wie zur vollständigen Reduktion von NOₓ erforderlich ist. Im Falle von Ammoniak beträgt die stöchiometrisch notwendige Menge für einen vollständigen Abbau des NOₓ 1,33 (8/6) molare Anteile an Ammoniak, bezogen auf einen molaren Anteil an NOₓ. Es hat sich herausgestellt, dass bei steigendem Druck bzw. bei sinkenden Reaktionstemperaturen die für einen vollständigen Abbau des NOₓ erforderliche Menge an Ammoniak von den oben erwähnten 1,33 molaren Anteilen auf 0,9 molare Anteile sinkt. Gegebenenfalls wird ein geringer Anteil von Ammoniak auch bei der N₂O Reduktion verbraucht, so dass unter Umständen für die vollständige NOₓ Reduktion eine entsprechend größere Menge an Ammoniak einzusetzen ist, beispielsweise bis zu 1,5 molare Anteile an Ammoniak, bezogen auf einen molaren Anteil an NOₓ.

Als Katalysatoren finden die oben definierten eisenbeladene Zeolithe oder Mischungen von eisenbeladenen Zeolithen Verwendung.

Es wurde überraschenderweise gefunden, dass mit derartigen Katalysatoren bei vollständiger NOₓ Reduktion eine sehr effiziente N₂O Reduktion vorgenommen werden kann.

Unter den vorliegenden Verfahrensbedingungen wirkt das Stickstoff enthaltende Reduktionsmittel hauptsächlich als Reduktionsmittel für NOₓ und die Kohlenwasserstoffe, Kohlenmonoxid und/oder Wasserstoff reduzieren praktisch selektiv das im Gas enthaltene N₂O.

Die Ausführung der Reaktionszone ist im Sinne der Erfindung frei gestaltbar. Sie kann beispielsweise in einem Röhrenreaktor oder Radialkorbreaktor angeordnet sein. Auch die Art der Einbringung der gasförmigen Reduktionsmittel in den zu behandelnden Gasstrom ist im Sinne der Erfindung frei gestaltbar, solange dieses in Stromrichtung vor der Reaktionszone erfolgt. Sie kann zum Beispiel in der Eintrittsleitung vor dem Behälter für das Katalysatorbett oder unmittelbar vor dem Bett erfolgen. Die Reduktionsmittel können in Form von Gase oder auch in Form einer Flüssigkeit bzw. wässrigen Lösung eingebracht werden, die im zu behandelnden Gasstrom verdampft.

Die Reihenfolge der Zugabe der Reduktionsmittel für NOₓ bzw. für N₂O kann beliebig gewählt werden. So kann die Reihenfolge der Schritte a) und b) vertauscht werden oder beide Typen von Reduktionsmitteln können in einem Schritt zugeführt werden.

Die erfindungsgemäß verwendeten Katalysatoren sind dem Fachmann bekannt und können an sich bekannte Zusatzstoffe, wie z.B. Bindemittel, enthalten.

In den Katalysator integriert oder nachgeschaltet oder sonstwie verbunden kann ein Katalysator oder eine Katalysatorkomponente zur Oxidation von eventuell nicht umgesetztem oder von partiell oxidiertem Stoff aus der Gruppe, die von einem oder mehreren Kohlenwasserstoffen, vorzugsweise CH₄, oder C₃H₈, sowie CO und H₂ gebildet wird, sein.

Erfindungsgemäß verwendete Katalysatoren basieren vorzugsweise auf Zeolithen, in die durch einen Festkörper-lonenaustausch Eisen eingebracht wurde. Üblicherweise geht man hierfür von den kommerziell erhältlichen Ammonium-Zeolithen und den entsprechenden Eisensalzen (z.B. FeSO₄ x 7 H₂O) aus und mischt diese auf mechanischem Wege intensiv miteinander in einer Kugelmühle bei Raumtemperatur. (Turek et al.; Appl. Catal. 184, (1999) 249-256; EP-A-0 955 080). Die erhaltenen Katalysatorpulver werden anschließend in einem Kammerofen an der Luft bei Temperaturen im Bereich von 400 bis 600°C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilikate wie z.B. Kaolin.

Gemäß der vorliegenden Erfindung sind die verwendbaren Zeolithe mit Eisen beladen. Der Eisengehalt kann dabei bezogen auf die Masse an Zeolith bis zu 25% betragen, vorzugsweise jedoch 0,1 bis 10% (Eisen berechnet als Fe₂O₃).

Genaue Angaben zum Aufbau oder Struktur dieser Zeolithe werden im Atlas of Zeolite Structure Types, Elsevier, 4^{th} revised Edition 1996, gegeben, Erfindungsgemäß besonders bevorzugte Zeolithe sind vom FAU-Typ und insbesondere vom BEA-Typ.

Das mit Stickstoffoxiden beladene Gas wird üblicherweise mit einer Raumgeschwindigkeit von 200 bis 200.000 h⁻¹, vorzugsweise 5.000 bis 100.000 h⁻¹, bezogen auf das Katalysatorvolumen, über den Katalysator geleitet.

Unter dem Begriff Raumgeschwindigkeit ist dabei der Quotient aus Volumenanteilen Gasgemisch pro Stunde bezogen auf einen Volumenanteil Katalysator zu verstehen.

Die Raumgeschwindigkeit kann somit über die Strömungsgeschwindigkeit des Gases und/oder über die Katalysatormenge eingestellt werden.

Das erfindungsgemäße Verfahren wird im allgemeinen bei einem Druck im Bereich von 1 bis 50 bar, vorzugsweise 1 bis 25 bar durchgeführt, wobei ein höherer Betriebsdruck den Verbrauch an Reduktionsmittel, die Nebenproduktbildung und den Schlupf verringert.

Die Einspeisung des Reduktionsmittels in das zu behandelnde Gas erfolgt durch eine geeignete Vorrichtung, wie z.B. einem entsprechenden Druckventil oder entsprechend ausgestalteten Düsen.

Der Wassergehalt des Reaktionsgases liegt vorzugsweise im Bereich von <25 Vol.%, insbesondere im Bereich <15 Vol.%.

Im allgemeinen wird eine relativ niedrige Wasserkonzentration bevorzugt, da höhere Wassergehalte höhere Betriebstemperaturen erforderlich machen würden. Diese könnte je nach eingesetztem Zeolithtyp und Betriebsdauer die hydrothermalen Stabilitätsgrenzen des Katalysators überschreiten und ist somit dem jeweils gewählten Einzelfall anzupassen.

Auch die Anwesenheit von CO₂ sowie von anderen desaktivierenden Bestandteilen des Reaktionsgases, die dem Fachmann bekannt sind, sollten nach Möglichkeit minimiert werden, da sich diese negativ auf den N₂O- und NOₓ-Abbau auswirken würden.

Das erfindungsgemäße Verfahren arbeitet auch in Gegenwart von O₂, da die erfindungsgemäß verwendeten Katalysatoren entsprechende Selektivitäten aufweisen, die bei Temperaturen <450°C eine Reaktion des gasförmigen Reduktionsmittels, wie NH₃, mit O₂ unterdrücken.

All diese Einflußfaktoren, sowie die gewählte Katalysatorbelastung d.h. Raumgeschwindigkeit sind bei der Wahl der geeigneten Betriebstemperatur der Reaktionszone zu berücksichtigen.

Die mit dem vorliegenden Verfahren bei niedrigen Betriebstemperaturen erzielbaren Umsätze für N₂O und NOₓ liegen für NOₓ bei nahezu 100 % und für N₂O vorzugsweise bei > 70%, insbesondere bei > 80%. Das Verfahren ist damit hinsichtlich seiner Leistungsfähigkeit, d.h. der erzielbaren Umsatzgrade des N₂O und NOₓ Abbaus, sowie hinsichtlich der Betriebs- und Investitionskosten dem Stand der Technik überlegen.

Infolge der nahezu vollständigen NOₓ-Reduktion wird auch ein besonders hoher Abbaugrad an N₂O erreicht und es wird ein überraschend geringer Verbrauch des Reduktionsmittels für N₂O erreicht, was ein Vorteil der Erfindung ist.

Das erfindungsgemäße Verfahren kann besonders bei der Salpetersäureproduktion, bei Kraftwerksabgasen oder bei Gasturbinen zum Einsatz kommen. In diesen Prozessen fallen stickoxidhaltige Prozeß- und Abgase an, die mit Hilfe des hier aufgezeigten Verfahrens kostengünstig entstickt werden können.

In einer Ausführungsform des erfindungsgemäßen Verfahrens wird einem Stickoxide enthaltenden Gas ein Gemisch aus CH₄ und NH₃ zugemischt und beides wird zusammen in einen Reaktor, welcher einen eisenbeladenen Zeolith vom Typ BEA enthält, geleitet und dort entstickt. Das gereinigte Abgas wird in die Atmosphäre geleitet. Anstelle der vorherigen Mischung von Methan und Ammoniak können die Gase dem Stickoxide enthaltenden Gas vor dem Eintritt in den Reaktor auch getrennt zugeführt werden.

### Beispiele

Die nachstehend beschriebenen Versuche wurden in einem Laboraufbau realisiert und veranschaulichen die Erfindung.

Als Katalysator wurde ein mit Eisen beladener Zeolith-Katalysator vom Typ BEA verwendet, welcher als Granulat mit einer Korngröße von 0,7 -1,4 mm eingesetzt wurde.

Als Vorrichtung zur Minderung des N₂O-Gehaltes kam in den nachstehenden Beispielen ein Rohrreaktor zum Einsatz, welcher mit einer solchen Menge an obigem Katalysator befüllt war, dass bezogen auf den eintretenden Gasstrom ein Raumgeschwindigkeit von 10.000 h⁻¹ resultierte. Die Temperatur des Gases am Eintritt des Reaktors wurde durch Beheizung auf 340°C eingestellt. Die Analyse des in die Vorrichtung ein- und austretenden Gasstroms erfolgte mit Hilfe eines FTIR-Gasanalysators.

Die Zusammensetzung des zu behandelnden Gasgemisches betrug:
1500 ppm N₂O; 600 ppm NOₓ, 2,5 %vol O₂, 0,4% H₂O in N₂.

Vor Eintritt des Gasstromes in das Katalysatorbett erfolgte die Zugabe von Ammoniak und Methan bzw. Propan.

In Abhängigkeit der zugesetzten Mengen an Reduktionsmitteln wurden am Reaktoraustritt folgende Restkonzentrationen an N₂O und NOₓ erhalten:

| Beispiel | Zugesetzte | Zugesetzte | Zugesetzte | N₂O-Rest- | NOₓ-Rest- |
|---|---|---|---|---|---|
| | Menge an | Menge an | Menge an | konzen- | konzen- |
| | NH₃ | CH₄ | C₃H₈ | tration | tration |
| 1 | 700 ppm | 450 ppm | - | 897 ppm | 16 ppm |
| 2 | 800 ppm | 450 ppm | - | 25 ppm | 0 ppm |
| 3 | 500 ppm | - | 500 ppm | 425 ppm | 26 ppm |
| 4 | 600 ppm | - | 500 ppm | 129 ppm | 2 ppm |

Wie obiger Tabelle zu entnehmen ist, wurde dann ein hoher N₂O-Abbau erzielt, wenn die NOₓ-Reduktion mittels NH₃-Zugabe vollständig ist, wie dies in den Beispielen 2 und 4 der Fall ist. Selbst geringe NOₓ-Restkonzentrationen, wie in Beispielen 1 und 3 gezeigt, inhibieren noch den N₂O-Abbau.

Mit dem erfindungsgemäßen Verfahren werden damit hohe Abbauraten für N₂O und NOₓ bei niedriger Temperatur erreicht. Die Erfindung ist damit dem Stand der Technik, wie in JP-A-09/000,884 offenbart, deutlich überlegen. Angegeben werden hier N₂O- Abbauleistungen von nur ca. 60-80% bei einer deutlich höheren Temperatur von 450°C.

## Patentansprüche

1. Verfahren zur Minderung des Gehalts von NOₓ und N₂O in Gasen, insbesondere in Prozeßgasen und Abgasen, umfassend die Maßnahmen:
a) Zugabe mindestens eines Stickstoff enthaltenden Reduktionsmittels zu dem NOₓ und N₂O enthaltenden Gas in einer solchen Menge, wie mindestens zur vollständigen Reduktion des NOₓ benötigt wird,
b) Zugabe eines Kohlenwasserstoffes, von Kohlenmonoxid, von Wasserstoff oder von einem Gemisch einer oder mehrerer dieser Gase zu dem NOₓ und N₂O enthaltenden Gas für die Reduktion des N₂O, und
c) Leiten des Gasgemisches in mindestens eine Reaktionszone mit Temperaturen bis zu 450°C, die einen oder mehrere mit Eisen beladene Zeolithe enthält.

2. Verfahren nach Anspruch 1, **dadurch gekennzeichnet, dass** das Stickstoff enthaltende Reduktionsmittel Ammoniak ist.

3. Verfahren nach Anspruch 1, **dadurch gekennzeichnet, dass** die mindestens eine Reaktionszone einen mit Eisen beladenenen Zeolith enthält, der aus Zwölfringen bestehende Kanäle aufweist.

4. Verfahren nach Anspruch 3, **dadurch gekennzeichnet, dass** sämtliche Kanäle des mit Eisen beladenen Zeolith aus Zwölfringen bestehen.

5. Verfahren nach Anspruch 4, **dadurch gekennzeichnet, dass** der mit Eisen beladene Zeolith vom Typ BEA oder FAU ist.

6. Verfahren nach Anspruch 1, **dadurch gekennzeichnet, dass** das Stickstoff enthaltende Reduktionsmittel Ammoniak ist und dass als Reduktionsmittel für N₂O Ethan, Propan, Butan, Synthesegas oder LPG und insbesondere Methan eingesetzt wird.

7. Verfahren nach Anspruch 6, **dadurch gekennzeichnet, dass** als mit Eisen beladener Zeolith ein mit Eisen beladener Zeolith vom Typ BEA eingesetzt wird.

## Claims

1. Process for reducing the content of NOₓ and N₂O in gases, in particular in process gases and offgases, which comprises the measures:
a) addition of at least one nitrogen-containing reducing agent to the NOₓ- and N₂O-containing gas in at least the amount required for complete reduction of the NOₓ,
b) addition of a hydrocarbon, of carbon monoxide, of hydrogen or of a mixture of one or more of these gases to the NOₓ- and N₂O-containing gas for the reduction of the N₂O and
c) introduction of the gas mixture into at least one reaction zone at temperatures of up to 450°C which contains one or more iron-laden zeolites.

2. Process according to Claim 1, **characterized in that** the nitrogen-containing reducing agent is ammonia.

3. Process according to Claim 1, **characterized in that** the reaction zone or zones contains an iron-laden zeolite which has channels made up of twelve-membered rings.

4. Process according to Claim 3, **characterized in that** all channels of the iron-laden zeolite are made up of twelve-membered rings.

5. Process according to Claim 4, **characterized in that** the iron-laden zeolite is of the BEA or FAU type.

6. Process according to Claim 1, **characterized in that** the nitrogen-containing reducing agent is ammonia and **in that** ethane, propane, butane, synthesis gas or LPG and in particular methane is used as reducing agent for N₂O.

7. Process according to Claim 6, **characterized in that** an iron-laden zeolite of the BEA type is used as iron-laden zeolite.

## Revendications

1. Procédé de réduction de la teneur en NOₓ et N₂O dans les gaz, en particulier dans les gaz de processus et les gaz d'échappement, comprenant les mesures consistant à :
a) ajouter au moins un agent réducteur contenant de l'azote au gaz contenant du NOₓ et du N₂O en au moins la quantité requise pour la réduction complète du NOₓ,
b) ajouter un hydrocarbure, du monoxyde de carbone, de l'hydrogène ou un mélange d'un ou de plusieurs de ces gaz au gaz contenant du NOₓ et N₂O pour la réduction du N₂O, et
c) introduire le mélange gazeux dans au moins une zone réactionnelle à des températures jusqu'à 450°C, laquelle contient une ou plusieurs zéolites chargées de fer.

2. Procédé selon la revendication 1, **caractérisé en ce que** l'agent réducteur contenant de l'azote est l'ammoniac.

3. Procédé selon la revendication 1, **caractérisé en ce qu'**au moins une zone réactionnelle contient une zéolite chargée de fer qui présente des canaux constitués d'une douzaine d'anneaux.

4. Procédé selon la revendication 3, **caractérisé en ce que** tous les canaux de la zéolite chargée de fer comprennent une douzaine d'anneaux.

5. Procédé selon la revendication 4, **caractérisé en ce que** la zéolite chargée de fer est du type BEA ou FAU.

6. Procédé selon la revendication 1, **caractérisé en ce que** l'agent réducteur contenant de l'azote est de l'ammoniac et **en ce que** l'éthane, le propane, le butane, le gaz de synthèse ou LPG et en particulier le méthane sont utilisés en tant que gaz réducteur pour N₂O.

7. Procédé selon la revendication 6, **caractérisé en ce qu'**une zéolite chargée de fer du type BEA est utilisée comme zéolite chargée de fer.
